# EUROPÄISCHE PATENTSCHRIFT

(11) **EP 1 873 170 B1**
(45) Veröffentlichungstag und Bekanntmachung des Hinweises auf die Patenterteilung: **23.04.2014**
(21) Anmeldenummer: 07011537.3
(22) Anmeldetag: 13.06.2007
(51) Int. Cl.: C08F 6/00

(54) **Verfahren zum Strippen von Polymerpolyolen**
Method for stripping polymer polyols
Procédé destiné au stripage de polyols polymères

(30) Priorität: 26.06.2006 DE 102006029588
(43) Veröffentlichungstag der Anmeldung: 02.01.2008
(73) Patentinhaber: Bayer Intellectual Property GmbH, 40789 Monheim (DE)
(72) Erfinder: Brockelt, Michael, 51373 Leverkusen (DE); Deibele, Ludwig, Dr., 80333 München (DE); Dietrich, Manfred, Dr., 60599 Frankfurt (DE); Hadley, Markus, Dr. House 387 Jiu Shi Western Suburban Garden, Shanghai 201 702 (CN); Leu, Thomas Jan, Dr., 42799 Leichlingen (DE); Naberfeld, Guido, Dr., Pittsburgh (US); Dohrn, Ralf, Dr., 51467 Bergisch Gladbach (DE)
(74) Vertreter: BIP Patents

(56) Entgegenhaltungen:
- WO-A-2006/110697
- DE-C1- 19 830 171
- JP-A- 56 104 936

## Beschreibung

Die Erfindung betrifft ein Verfahren zur Aufreinigung von Polymerpolyolen durch Strippen über Packungskolonnen.

Aufgrund (öko-)toxikologischer Gesichtspunkte, aber auch, um den so genannten Fogging-Effekt (Abscheiden dünner aber stark lichtbrechender Filme auf Innenseiten von Verscheibungen durch hitzebedingte Migration flüchtiger Substanzen aus eingesetzten Werkstoffen) durch im Automobilinnenraum verbaute Kunststoffteile zu minimieren, gewinnt auch bei der Herstellung polymergefüllter Polyetherpolyole ("Polymerpolyole"; "PMPO") das gründliche Entfernen von flüchtigen Bestandteilen wie Restmonomeren, Kettenreglern oder niedermolekularen Reaktionsprodukten wie Rekombinations- oder Reaktionsprodukten des verwendeten Polymerisationsinitiators immer mehr an Bedeutung. Insbesondere für den europäischen Markt ist es gleichzeitig wichtig, dass die Polymerpolyole dabei keine zu starke Verfärbung (Yellowness Index < 25, Messung nach DIN 5033, Berechnung nach DIN 6167 bzw. ASTM E 313) erleiden. Daher kommt keine der üblicherweise angewandten Methoden wie beispielsweise der Einsatz von Dünnfilmverdampfern in Frage, da hier Temperaturen von > 160°C notwendig sind, um das gewünschte Trennergebnis zu erzielen.

Aus WO 00/00531 und WO 98/52988 ist bekannt, dass man Polymerpolyole nach der radikalischen Polymerisation der zur Füllung eingesetzten ungesättigten Monomere und einer Nachreaktionszeit einem Reinigungsschritt unterwirft. Hierfür wird die Vakuumstrippung vorgeschlagen, wobei jedoch keine konkrete Verfahrensweise oder Verfahrensbedingungen angegeben werden.

Die Aufreinigung und Desodorierung von Polyetherpolyolen und wässrigen Polymerdispersionen sind im Stand der Technik jedoch gut beschrieben. Die dort angegebenen Verfahren wie Vakuumstrippung (Entspannungsverdampfung), Verdampfung in Fallrohrapparaten, der Einsatz von Dünnschichtverdampfem oder die Verwendung von Boden-, Füllkörper- bzw. Packungskolonnen und deren Bedingungen können aber nicht unmittelbar auf Polymerpolyole übertragen werden, da es sich bei den abzutrennenden Substanzen um grundlegend andere Verbindungen handelt. Ferner weisen Polymerpolyole bei gleichen Betriebsbedingungen und Temperaturen bis zu 160°C deutlich höhere Viskositäten von bis zu 500 mPas auf als Polyetherpolyole (bis 60 mPas) und wässrige Polymerdispersionen (bis 10 mPas).

Mit dem Strippen von wäßrigen Polymerdispersionen und -suspensionen befasst sich die Patentanmeldung DE-A 198 28 183, in der die Entfernung von flüchtigen Bestandteilen durch chemische Desodorierung, gefolgt von einer physikalischen Desodorierung vorzugsweise mit Wasserdampf in Gegenstromkolonnen beschrieben wird. Auch in der Patentanmeldung DE-A 197 16 373 wird die Entfernung von Monomeren und Leichtsieder durch physikalishe Desodorierung beschrieben. Diese erfolgt vorzugsweise mit Wasserdampf auf Regen- oder Querstromsiebböden, deren konstruktive Details Inhalt des Patents sind. Gegenstromkolonnen mit Regen- oder Querstromsiebböden zur Entfernung unerwünschter flüchtiger organischer Komponenten werden auch in der DE-C 198 47 115 beschrieben. Als Strippmittel werden bevorzugt gasförmige Stoffe, besonders bevorzugt jedoch Wasserdampf eingesetzt.

Die Patentanmeldung EP-A 0 982 341 beschreibt ein Verfahren zur Herstellung von Polyetherpolyolen, bei dem diese durch eine Kombination aus reaktiv-destillativen Schritten aufgearbeitet wird. Der destillative Schritt besteht aus einer Kombination von Normaldruck- und Vakuumkolonnen, die mit Inertgas, vorzugsweise Stickstoff betrieben werden.

In EP-A 0 819 712 wird ein Verfahren zur Herstellung von Polyurethanweichschaumstoffen beschrieben. Hierbei wird die Aufreinigung von Polyolen in einem kombinierten thermish-destillativen Schritt in oberflächenvergrößernden Einrichtungen, ggf. unter Verwendung von Inertgas durchgeführt. Kennzeichnend ist, dass die Behandlung bei maximal 0,1 Gew.-% Wasser, vorzugsweise im wasserfreien Zustand durchgeführt wird.

WO-A 2006/110697 offenbart ein Verfahren zur Herstellung hydroxylierter Kohlenwasserstoffe. WO-A 2006/110697 offenbart kein Verfahren zur Aufreinigung von polymerisatgefüllten Polyetherpolyolen und WO-A 2006/110697 offenbart nicht die Abtrennung flüchtiger Bestandteile mittels überhitztem Wasserdampf und dass ein Flüssigkeitsverteiler mit einer Tropfstellendichte von mehr als 400 Tropfstellen pro m² Kolonnenquerschnitt eingesetzt wird.

DE-C 198 30 171 offenbart ein Verfahren zur Herstellung von Phytosqualen umfassend einen Reinigungsschritt. Als Reinigungsschritt offenbart DE-C 198 30 171 u.a. eine Destillation einer Mischung enthaltend Fettsäureester, wobei die Destillation beispielsweise über eine gepackte Kolonne typischerweise bei 250 - 290°C / 5 bis 25 mbar ausgeführt wird. Diese Fettsäureester gemäß DE-C 198 30 171 sind offenbart als Ester von mehrwertigen Alkoholen (vorzugsweise Trimethylolpropan oder Pentaerythrit) und freien Fettsäuren und Glyceriden

JP-A 56 104936 offenbart ein Verfahren zur Reinigung von Polyetherpolyolen, wobei dies mit Wasser oder Stickstoff erfolgt. JP-A 56 104936 offenbart aber kein Verfahren zur Aufreinigung von polymerisatgefüllten Polyetherpolyolen und JP-A 56 104936 offenbart nicht, dass ein Flüssigkeitsverteiler mit einer Tropfstellendichte von mehr als 400 Tropfstellen pro m² Kolonnenquerschnitt eingesetzt wird.

In EP-A 0 864 598 wird ein thermisch-destillativer Behandlungsschritt für Polyetherpolyole durch Einsatz einer Gegenstromkolonne unter Verwendung eines flüssigen und/oder gasförmigen Reinigungsmittels mit hohem Unlöslichkeitsgrad im Polyetherpolyol beschrieben. Als Reinigungsmittel werden CO₂ und Stickstoff benannt.

Im US-Patent 6,060,627 wird die Entfernung von Nebenprodukten aus einem Polyol (propoxiliertem Glycerin) in einer Gegenstromkolonne mit geordneten Packungen beschrieben. Durch Einsatz von Wasserdampf oder Stickstoff als Strippmittel werden aus dem Polyol die Nebenprodukte Allylalkohol, Propylenglykol sowie Mono- und Di-Ether des Allylalkohols entfernt Weder eine Strippung von reinen noch von polymergefüllten Polyetherpolyolen in Packungskolonnen mit Wasserdampf als Strippmedium ist aus dem Stand der Technik damit bekannt.

Aufgabe der Erfindung war es, ein Verfahren zur Aufreinigung von Polymerpolyolen zur Verfügung zu stellern, welches mit Temperaturen von < 160°C auskommt und eine Reduzierung von Acrylnitril, Styrol sowie der Restmengen an gegebenenfalls eingesetztem Kettenregler und bei Verwendung von Azoinitiatoren auftretenden Rekombinationsprodukten des Initiators von < 25 ppm Acrylnitril, < 50 ppm Styrol, < 50 ppm Kettenregler und < 280 ppm Rekombinations- produkten gewährleistet. Ferner darf der Yellowness-index der so aufgereinigten Polymerpolyole nicht über 20 ansteigen und der Restgehalt an Wasser nicht über 1000 ppm liegen.

Es konnte nun gefunden werden, dass Polymerpolyole, die den vorstehenden Anforderungen gerecht werden, hergestellt werden können, wenn man ein Strippverfahren einsetzt, bei dem in einem ersten Schritt
A) über Packungskolonnen mittels überhitztem Wasserdampf flüchtige Bestandteile aus dem zu reinigenden Polymerpolyol abgetrennt werden und in einem zweiten Schritt
B) das aus A) erhaltene aufgereinigte Polymerpolyol gegebenenfalls wiederum über einer Packungskolonne von noch enthaltenem Wasser befreit wird,
wobei in Schritt A) zur Zuführung des aufzureinigenden Polymerpolyols ein Flüssigkeitsverteiler mit einer Tropfstellendichte von mehr als 400 Tropfstellen pro m² Kolonnenquerschnitt eingesetzt wird und im Gesamtverfahren die Temperaturen nicht über 160°C liegen dürfen.

Polymerpolyole, die nach dem erfindungsgemäßen Verfahren aufgereinigt werden können, sind polymerisatgefüllte Polyetherpolyole.

Solche Polymerpolyole können hergestellt werden, indem ein oder mehrere olefinisch ungesättigte Monomere in einem Basispolyol gelöst oder dispergiert werden und anschließend mittels radikalischer Initiatoren auspolymerisiert werden, wobei eine stabile Dispersion aus Polymerpartikeln im Basispolyol entsteht.

Die als Basispolyole dienenden Polyethterpolyole weisen bevorzugt mittlere OH-Funktionalitäten von 1,5 bis 8, bevorzugt 2 bis 6, besonders bevorzugt 3 bis 6 auf.

Sie weisen typischerweise OH-Zahlen von 15 bis 120 mg KOH/g, bevorzugt 20 bis 60 mg KOH/g, besonders bevorzugt 25 bis 52 mg KOH/g auf.

Bevorzugte Polyetherpolyole sind reine Propylenoxidpolyole und Ethylenoxid-Proplyenoxidbasierte Mischether, welche auch Ethylenoxid-Endblöcke aufweisen können.

Dabei ist es unerheblich, ob es sich um Polyether handelt, welche über Basenkatalyse beispielsweise mit KOH oder basenfrei beispielsweise mittels Doopelmetallcyanid-Katalysatoren (DMC-Katalysatoren) hergestellt wurden.

Als olefinisch ungesättigte Monomere werden bei der Herstellung der PMPO's bevorzugt Styrol und Acrylnitril eingesetzt.

Als Initiatoren kommen Radikalinitiatoren, bevorzugt Azoinitiatoren wie 2,2-Azodi(isobutyronitril) oder 2,2-Azodi(2-methylbutyronitril) oder organische Peroxide wie tert-Amyl peroxy-2-ethylhexanoat oder tert-Butyl peroxypivalat infrage.

Bei Verwendung von Azoinitiatoren können im Laufe der Polymerisation so genannte Rekombinationsprodukte des Initiators als Nebenprodukte entstehen. Dies geschieht in der Regel nach der Zersetzung des Initiators und Freisetzung von N₂ durch Rekombination der beiden verbleibenden Alkylradikale zu einem Dinitril.

Bei Verwendung von organischen Peroxiden als Initiatoren können sich im Laufe der Polymerisation unter anderem organische Säuren, Alkohole, Ketone oder Aldehyde bilden.

Zusätzlich können Kettenregler wie Alkohole oder Mercaptane und/oder Stabilisatoren oder Macromere einsetzt werden.

Die in dem erfindungsgemäßen Verfahren eingesetzten Polymerpolyole der vorstehend genannten Art weisen typischerweise Füllstoffgehalte von 10 bis 60 Gew.-%, bevorzugt, 20 bis 50 Gew.-%, besonders bevorzugt 25 bis 45 Gew.-% auf.

Ihre Herstellung kann kontinuierlich oder im semi-batch Verfahren erfolgen, wobei die Fahrweise ein oder mehrstufig sein kann.

Ihre dynamische Viskosität bei 25°C (gemessen gemäß DIN EN ISO 3219 in einem Rotationsviskosimeter mit DIN-Prüfkörper) beträgt in der Regel 1 000 bis 8 000 mPas, bevorzugt 1 500 bis 6 500 mPas, besonders bevorzugt 1 800 bis 6 000 mPas.

Als Trennapparate werden im erfindungsgemäßen Verfahren bevorzugt Kolonnen, die im aktiven Abschnitt mit Stoffgrenzflächen vergrößernden, axial durchgehend gepackten Einbauten bestückt sind. Die Kolonnen können mit einem Sumpf und einem Abschnitt zur Tropfenabscheidung am Kolonnenkopf versehen sein. Die Kolonnen können weiterhin mit einer Einrichtung zur Wiederverteilung der Flüssigkeit sowie zur Dampfverteilung ausgerüstet sein. Der Durchmesser der Kolonnen und die Länge der aktiven Abschnitte werden üblicherweise unter Berücksichtigung der Flüssigkeits- und Gasbelastung, des tolerierbaren Druckverlusts und der geforderten Produktreinheit rechnerisch oder experimentell ermittelt.

Als Einbauten können strukturierte Packungen und Schüttfüllkörper, bevorzugt Packungen, besonders bevorzugt Packungen mit streifenförmiger Lamellenstruktur verwendet werden. Die spezifische Oberfläche beträgt dabei typischerweise 150 bis 500 m²/m³, bevorzugt 230 bis 450 m²/m³.

In den Kolonnen wird dabei bevorzugt ein Flüssigkeitsverteiler eingesetzt, der eine Tropfstellendichte von 450 bis 850, besonders bevorzugt 500 bis 700 Tropfstellen pro m² Kolonnenquerschnitt aufweist.

Der im Verfahren als Strippmittel eingesetzte Wasserdampf ist dadurch gekennzeichnet, dass seine Betriebstemperatur bei Betriebsdruck oberhalb des thermodynamisch definierten Taupunkts liegt. Er wird daher auch als überhitzt bezeichnet.

Um die Fluidtemperatur konstant zu halten und die Kondensation des als Strippmittel eingesetzten überhitzten Wasserdampfes zu vermeiden, wird der Kolonnenmantel über die gesamte Apparatelänge typischerweise ausreichend gedämmt, bevorzugt mit einer Begleitheizung ausgerührt.

Die auf den Kolonnenquerschnitt bezogene Flüssigkeitsbelastung beträgt typischerweise 0,3 bis 8 m²/h, bevorzugt 0,5 bis 6 m³/m²h, besonders bevorzugt 0,5 bis 3 m³/m²h.

Der Strippmittelmassenstrom beträgt bezogen auf den PMPO-Massenstrom 5 bis 40 %, bevorzugt 10 bis 30 %, besonders bevorzugt 10 bis 20 %.

Das erfindungsgemäße Verfahren wird derart geführt, dass sowhol die Temperatur des vorgewärmten PMPO als auch die des überhitzten Wasserdampfs und die des Mantels der Kolonne 100 bis 160°C, besonders bevorzugt 110 bis 150°C, ganz besonders bevorzugt 120 bis 140°C beträgt.

Der Betriebsdruck am Kolonnenkopf in Stufe A) beträgt dabei 10 bis 100 mbar, bevorzugt 10 bis 50 mbar, besonders bevorzugt 20 bis 30 mbar.

Der Druck am Kopf der Kolonne in Stufe B), sofern diese zum Einsatz kommt, ist gegenüber dem der ersten Kolonne um 5 bis 50 mbar abgesenkt..

Typischerweise weisen die nach dem erfindungsgemäßen Verfahren hergestellten Polymerpolyole einen Restwassergehalt von ≤ 1500 ppm, bevorzugt ≤ 1000 ppm, besonders bevorzugt ≤ 500 ppm auf.

Typischerweise weisen die nach dem erfindungsgemäßen Verfahren behandelten Polymerpolyole einen Yellowness Index von ≤ 25, bevorzugt ≤ 20, besonders bevorzugt ≤ 16 (gemessen nach DIN 5033 und berechnet nach DIN 6167 bzw. ASTM E 313) auf.

Durch Einsatz des erfindungsgemäßen Verfahrens ist es möglich, Polymerpolyole mit Gehalten an Acrylnitril von ≤ 25 ppm, Styrol von ≤ 50 ppm, gegebenenfalls eingesetztem Kettenregler von ≤ 50 ppm und bei Azoinitiatoren auftretendem Rekombinationsprodukt des Radikalstarters von ≤ 280 ppm zu erzeugen. Bevorzugt betragen die Restgehalte ≤ 10 ppm Acrylnitril, ≤ 20 ppm Styrol, ≤ 20 ppm Kettenregler und ≤ 150 ppm Rekombinationsprodukt des Radikalstarters, besonders bevorzugt ≤ 5 ppm Acrylnitril, ≤ 15 ppm Styrol, ≤ 15 ppm Kettenregler und ≤ 100 ppm Rekombinationsprodukt des Radikalstarters.

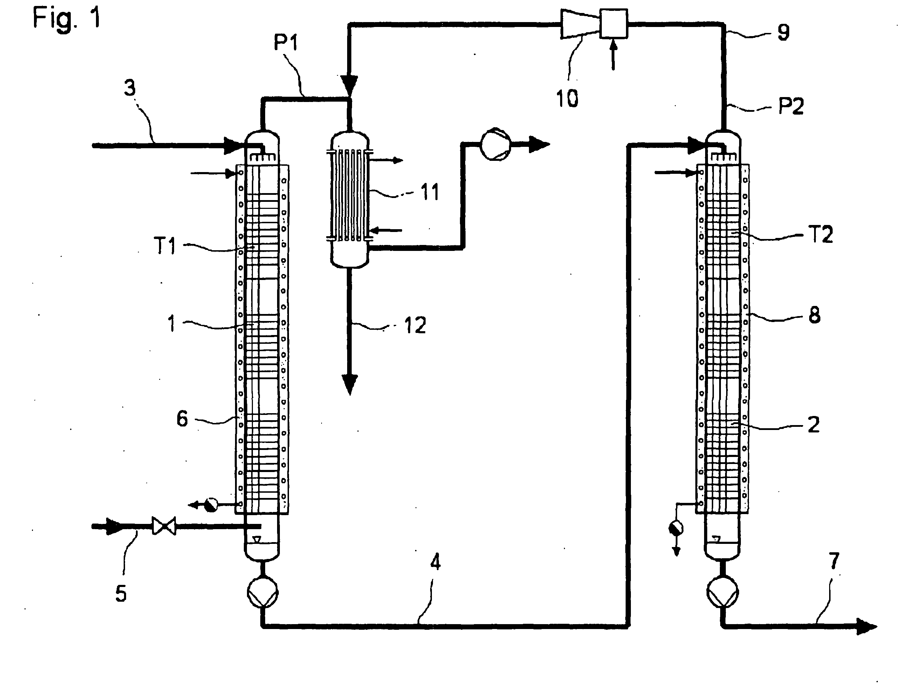

In einer bevorzugten Ausführungsform des Verfahrens wird wie in Fig. 1 verfahren. Fig. 1 zeigt das zweistufige Aufarbeitungsverfahren mit dem Stripper (1) und der Entgasungskolonne (2), die beide im Vakuum betrieben werden. Beide Kolonnen sind mit einer geordneten Packung oder Füllkörpern gefüllt. Am Kopf des Strippers wird das mit Nebenprodukten, Monomeren und ggf. weiteren Einsatzstoffen beladene Polymerpolyol (3) mittels eines Flüssigkeitsverteilers aufgegeben und fließt zum Kolonnensumpf, wo es gereinigt abgezogen wird (4). Im Gegenstrom zum Polymerpolyol strömt der Strippdampf zum Kolonnenkopf. Er wird dem Stripper im Sumpf zugeführt (5).

Der Stripper wird isotherm betrieben, wobei zugeführte Polymerlösung/-dispersion, Strippdampf und Kolonnenmantel auf der gleichen Kolonnentemperatur (T1) gehalten werden. Dazu wird der Kolonnenmantel (6) mit Dampf, wie in Fig. 1 gezeigt, einem Heizmedien oder elektrisch über seine gesamte Länge auf einer konstanten Temperatur gehalten. Diese Kolonnentemperatur soll in einem Bereich liegen, in dem einerseits die Viskosität der Polymerlösung/-dispersion möglichst gering ist und andererseits das Produkt nicht geschädigt wird. Das Kolonnenvakuum (P1) wird so gewählt, dass der Wasserdampf überhitzt ist und somit in der Kolonne nicht kondensiert.

In der Entgasungskolonne (2) werden weitere Leichtsieder und das durch die Strippung eingeschleuste Wasser abgetrennt. Dazu wird das Polymerpolyol (4) auf den Kopf der Entgasungskolonne aufgegeben und nach erfolgter Entgasung am Sumpf (7) abgezogen. Die Entgasungskolonne wird ebenfalls isotherm betrieben, wobei der Kolonnenmantel (8) wie beim Stripper mit Dampf, wie in Fig. 1 gezeigt, einem Heizmedien oder elektrisch über seine gesamte Länge auf einer konstanten Temperatur gehalten wird. Die Kolonnentemperatur (T2) der Entgasungskolonne sollte möglichst gleich der Kolonnentemperatur des Strippers (T1) sein, doch höchstens 10° unter dieser liegen. Das Vakuum der Entgasungskolonne (P2) muss unter dem Vakuum des Strippers (P1) liegen.

Die Brüden der Entgasungskolonne (9) werden durch einen Verdichter (10), am einfachsten einen Dampfstrahler wie in Fig. 1 gezeigt, auf den Druck des Strippers (P1) verdichtet. Anschließend werden die Brüden von Stripper und Entgasungskolonne gemeinsam im Kondensator (11) kondensiert. Das Kondensat (12) kann direkt der Abwasseraufarbeitung zugeführt werden.

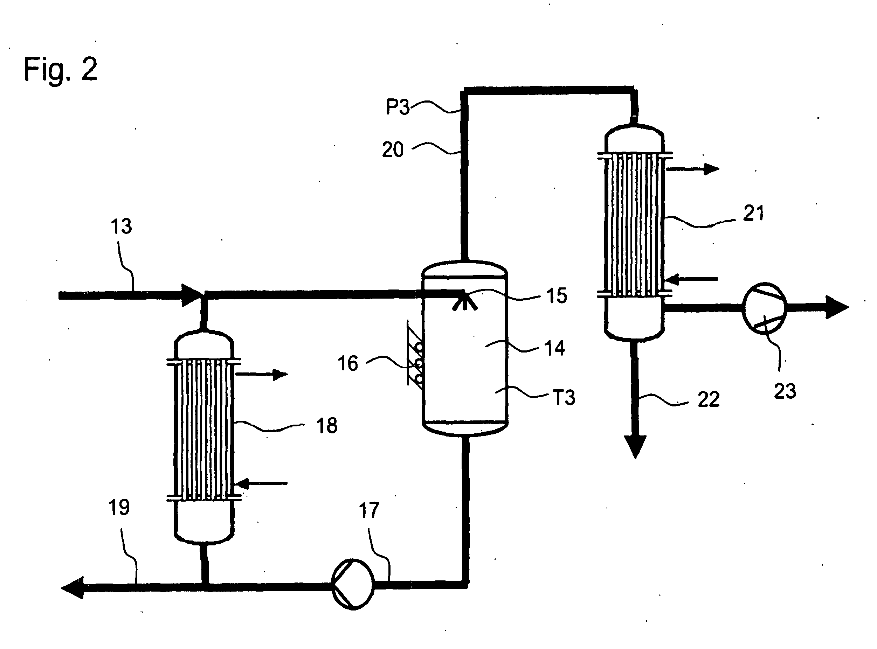

Der Anteil der Leichtsieder, also Verbindungen, die bei 10 bis 100 mbar, bevorzugt 10 bis 50 mbar einen Siedepunkt von weniger als 160°C, bevorzugt weniger als 130°C haben, im Zulauf zum Stripper sollte 2 Gew.-% bezogen auf den Zulauf nicht überschreiten, da sonst zu viel Wasserdampf kondensiert und durch die Entgasung aus der Polymerlösung/-dispersion nicht mehr weitgehend abgetrennt werden kann. Aus wirtschaftlichen Gründen ist es zweckmäßig, bei höheren Anteilen an Leichtsiedern z.B. eine Entspannungsstufe vor den Stripper zu schalten. Dann wird, wie in Fig. 2 gezeigt, die mit größeren Mengen Lösungsmittel beladene Polymerlösung/-dispersion (13) einem Entspannungsbehälter (14) zugeführt, wenn erforderlich über einen Flüssigkeitsverteiler (15). Die adiabate Entspannungsverdampfung erfolgt infolge des mit einer Vakuumpumpe (23) abgesenkten Drucks (P3) und der in Strom (13) enthaltenen fühlbaren Wärme. Zusätzlich kann Wärme je nach erforderlicher Menge durch direkte Beheizung des Behälters (14) über aufgebrachte Heizschlangen (16) und/oder Erwärmung eines Umpumpstromes (17) mittels eines außen liegenden Wärmetauschers (18) eingebracht werden. Der an Leichtsiedern abgereicherte Polymerpolyolstrom (19) wird abgezogen und der Strippkolonne (s. Fig. 1) zugeführt. Die bei der Entspannung anfallenden Brüden (20) werden in diesem Fall mit einem externen Kondensator (21) niedergeschlagen. Da der Destillatstrom (22) verfahrensbedingt nur geringe Wasseranteile enthält, kann er nach einer Aufarbeitung wieder dem Prozess zugeführt werden.

### Beispiele:

Die dynamische Viskosität wurde bei der betreffenden Betriebstemperatur der Kolonne gemäß DIN EN ISO 3219 in einem Rotationsviskosimeter mit DIN-Prüflcörper gemessen.

Zur Trennung wurden geordneten Packung mit streifenförmiger Lamellenstruktur und einer spezifischen Oberfläche von 230 bis 450 m²/m³ (Typ Rombopak^{®} 9M, Firma Kühni, Allschwil, CH) eingesetzt.

### Vergleichsbeispiel 1

500 kg PMPO mit einer dynamischen Betriebsviskosität von 200 mPas, einem Yelloness-Index von 8,65 und einem Anteil der Flüchtigen von 0,1 Ma% Acrylnitril, 0,7 Ma% Isopropanol, 0,4 Ma% Styrol, 0,2 Ma% Rekombinationsprodukt und 0,05 Ma% Wasser wurden in einer Technikumskolonne (Durchmesser 150 mm, Füllhöhe 3 m, Füllung *Rombopak*^{®} *9M*) gestrippt. Der Kolonnenverteiler erzeugte mit 7 Tropfstellen eine Berieselungsdichte von 400/m².

Der Stripper wurde kontinuierlich bei einem Kopfdruck von 30 mbar betrieben. Das am Kopf der Kolonne zugeführte PMPO wurde auf 120°C vorgewärmt, der ihm entgegenströmende Wasserdampf auf 138°C überhitzt und der Kolonnenmantel durch eine elektrische Zusatzheizung auf 125°C gehalten.

Die Zulaufmenge an PMPO betrug 100 kg/h (Berieselungsdichte 6 m³/m²) bei einer Strippdampfmenge von 12 kg/h. Der Druckverlust in der Kolonne betrug 12 mbar. Der Anteil der flüchtigen Bestandteile im PMPO sank dabei nach der Strippung auf 5 ppm Acrylnitril, 40 ppm Isopropanol, 87 ppm Styrol und 600 ppm Rekombinationsprodukt; der Wassergehalt stieg dagegen auf 0,06 Ma% an. Der Yellowness-Index des gestrippten Produkts betrug 8,95.

### Vergleichsbeispiel 2

Bei Versuchsbedingungen wie unter Vergleichsbeispiel 1, jedoch bei einem Kopfdruck von 93 mbar, einer PMPO-Zulauftemperatur von 130 °C, einer Kolonnenmanteltemperatur von 140°C und einer Zulaufmenge von 146 kg/h erhöhen sich gegenüber Vergleichsbeispiel 1 die Restmengen an Flüchtigen auf 15 ppm Acrylnitril, 85 ppm Isopropanol, 140 ppm Styrol und 1150 ppm Rekombinationsprodukt. Der Wassergehalt betrug ca. 0,1 Ma%. Der Yelloness-Index stieg in der Strippung von 8,75 auf 9,0.

### Vergleichsbeispiel 3

2 kg PMPO mit einer dynamischen Betriebsviskosität von 370 mPas und einer Zusammensetzung von 0,1 Ma% Acrylnitril, 0,7 Ma% Isopropanol, 0,4 Ma% Styrol und 0,2 Ma% Rekombinationsprodukt wurden in einem 2,5 1 Glasreaktor auf 130°C aufgeheizt und anschließend für 90 Minuten bei dieser Temperatur und einem Druck von 30 mbar ausgeheizt. Der Anteil der flüchtigen Bestandteilen im PMPO sank dabei auf 40 ppm Acrylnitril, 130 ppm Isopropanol, 1300 ppm Styrol und 1700 ppm Rekombinationsprodukt. Der Yelloness-Index stieg in der Strippung von 10,0 auf 10,9.

### Vergleichsbeispiel 4

2 kg PMPO mit einer dynamischen Betriebsviskosität von 200 mPas und einer Zusammensetzung von 0,1 Ma% Acrylnitril, 0.7 Ma% Isopropanol, 0,4 Ma% Styrol und 0,2 Ma% Rekombinationsprodukt wurden in einem 2,5 1 Glasreaktor auf 130°C aufgeheizt und anschließend für 90 Minuten bei dieser Temperatur und einem Druck von 30 mbar ausgeheizt. Der Anteil der flüchtigen Bestandteilen im PMPO sank dabei auf 60 ppm Acrylnitril, 240 ppm Isopropanol, 1500 ppm Styrol und 1670 ppm Rekombinationsprodukt. Der Yelloness-Index stieg in der Strippung von 9,0 auf 10,6.

### Erfindungsgemäßes Beispiel 1

500 kg PMPO mit einer dynamischen Betriebsviskosität von 200 mPas, einem Yelloness-Index von 11,6 und einem Anteil der Flüchtigen von 0,1 Ma% Acrylnitril, 0,7 Ma% Isopropanol, 0,4 Ma% Styrol, 0,05 Ma% Rekombinationsprodukt und 0,05 Ma% Wasser wurden in einer Technikumskolonne (Durchmesser 150 mm, Füllhöhe 3 m, Füllung *Rombopak*^{®} *9M*) gestrippt. Der Kolonnenverteiler erzeugte mit 12 Tropfstellen eine Berieselungsdichte von 679 /m².

Der Stripper wurde kontinuierlich bei einem Kopfdruck von 30 mbar betrieben. Das am Kopf der Kolonne zugeführte PMPO wurde auf 120°C vorgewärmt, der ihm entgegenströmende Wasserdampf auf 136°C überhitzt und der Kolonnenmantel durch eine elektrische Zusatzheizung auf 130°C gehalten.

Die Zulaufmenge an PMPO betrug 50 kg/h (Berieselungsdichte 3 m³/m²) bei einer Strippdampfmenge von 10 kg/h. Der Druckverlust in der Kolonne betrug ca. 4 mbar. Der Anteil der flüchtigen Bestandteile im PMPO sank dabei nach der Strippung auf < 1 ppm Acrylnitril, 10 ppm Isopropanol, 6 ppm Styrol und < 100 ppm Rekombinationsprodukt; der Wassergehalt erhöhte sich kaum . Der Yellowness-Index des gestrippten Produkts betrug 12,1.

### Erfindungsgemäßes Beispiel 2

1000 kg PMPO mit einer dynamischen Betriebsviskosität von 370 mPas und einer Zusammensetzung von 0,1 Ma% Acrylnitril, 0,7 Ma% Isopropanol, 0,4 Ma% Styrol, 0,2 Ma% Rekombinationsprodukt und 0,05 % Wasser, wurden in einer Technikumskolonne (Durchmesser 150 mm, *Füllhöhe 3* m*, Füllung Rombopak*^{®} *9M*) gestrippt. Der Kolonnenverteiler erzeugte mit 12 Tropfstellen eine Berieselungsdichte von 679 /m².

Der Stripper wurde kontinuierlich bei einem Kopfdruck von 30 mbar betrieben. Das am Kopf der Kolonne zugeführte PMPO wurde auf 120°C vorgewärmt, der ihm entgegenströmende Wasserdampf auf 140°C überhitzt und der Kolonnenmantel durch eine elektrische Zusatzheizung auf 130°C gehalten.

Die Zulaufmenge an PMPO betrug 40 kg/h (Berieselungsdichte 2,8 m³/m²) bei einer Strippdampfmenge von 8 kg/h. Der Anteil der flüchtigen Bestandteile im PMPO sank dabei nach der Strippung auf < 1 ppm Acrylnitril, 2 ppm Isopropanol, 7 ppm Styrol und 270 ppm Rekombinationsprodukt; der Wassergehalt stieg dagegen auf 0,1 % an.

### Erfindungsgemäßes Beispiel 3

Der Stripper wurde kontinuierlich bei Versuchsbedingungen wie im erfindungsgemäßen Beispiel 2, jedoch mit einer Zulaufmenge an PMPO von 30 kg/h (Berieselungsdichte 1,8 m³/m²) und einer Strippdampfmenge von 6 kg/h betrieben. Der Anteil der flüchtigen Bestandteile im PMPO sank dabei nach der Strippung auf < 1 ppm Acrylnitril, <1 ppm Isopropanol, <1 ppm Styrol und ≤100 ppm Rekombinationsprodukt; der Wassergehalt stieg dagegen auf 0,1 % an.

Die anschließenden Entgasung der gestrippten PMPO's der erfindungsgemäßen Beispiele wurde in derselben Technikumskolonne wie die Strippung selbst durchgeführt, bei einem Kopfdruck von 10 mbar. Das am Kopf der Kolonne zugeführte PMPO wurde auf 120°C vorgewärmt und der Kolonnenmantel durch eine elektrische Zusatzheizung auf 120°C gehalten. Die Zulaufmenge an Polyether betrug 100 kg/h mit 0,1 % Wasser. Nach der Entgasung lag der Wassergehalt bei 200 ppm.

## Patentansprüche

1. Verfahren zur Aufreinigung von Polymerpolyolen, bei dem
A) über Packungskolonnen mittels überhitztem Wasserdampf flüchtige Bestandteile aus dem zu reinigenden Polymerpolyol abgetrennt werden und
B) gegebenenfalls danach das aus A) erhaltene aufgereinigte Polymerpolyol
wiederum über einer Packungskolonne von noch enthaltenem Wasser befreit wird,
wobei in Schritt A) zur Zuführung des aufzureinigenden Polymerpolyols ein Flüssig keitsverteilar mit einer Tropfstellendichte von mehr als 400 Tropfstellen pro m² Kolonnen-querschnitt eingesetzt wird und
wobei das Verfahren deraft geführt wird, dass sowohl die Temperatur des vorgewärmten Polymerpolyols als auch die des überhitzen Wasserdampfs und die des Mantels der Kolonne 100 bis 160°C beträgt und
wobei es sich bei den Polymerpolyolen um polymerisatgefüllte Polyetherpolyole handelt.

2. Verfahren gemäß Anspruch 1, **dadurch gekennzeichnet, dass** in den Kolonnen Packungen mit streifenförmiger Lamellenstruktur und einer spezifischen Oberfläche von 230 bis 450 m²/m³ eingesetzt werden.

3. Verfahren gemäß Anspruch 1 oder 2, **dadurch gekennzeichnet, dass** in Schritt A) und gegebenenfalls B) eine auf den Kolonnenquerschnitt bezogene Flüssigkeitsbelastung von 0,5 bis 3 m³/m²h herrscht.

4. Verfahren gemäß einem der Ansprüche 1 bis 3, **dadurch gekennzeichnet, dass** in Schritt A) und gegebenenfalls B) der Strippmittelmassenstrom bezogen auf den Polymerpolyol Massenstrom 10 bis 20 % beträgt.

5. Verfahren gemäß einem der Ansprüche 1 bis 4, **dadurch gekennzeichnet, dass** die nach dem Verfahren aufgereinigten Polymerpolyole einen Restwassergehalt von ≤ 500 ppm aufweisen.

6. Verfahren gemäß einem der Ansprüche 1 bis 5, **dadurch gekennzeichnet, dass** die nach dem Verfahren aufgereinigten Polymerpolyole Gehalte an Acrylnitril von ≤ 25 ppm, Styrol von ≤ 50 ppm gegebenenfalls eingesetztem Kettenregler von ≤ 50 ppm und bei Azoinitiatoren auftretendem Rekombinationsprodukt des Radikalstarters von ≤ 280 ppm aufweisen.

7. Verfahren gemäß einem der Ansprüche 1 bis 6, **dadurch gekennzeichnet, dass** die zugrunde liegenden Polymerpolyole hergestellt werden, indem in einem Basispolyol radikalisch polymerisierbare Monomere gelöst oder dispergiert und diese anschließend mittels radikalischer Initiatoren so auspolymerisiert werden, dass eine stabile Dispersion aus Polymerpartikeln im Basispolyol entsteht.

8. Verfahren gemäß Anspruch 7, **dadurch gekennzeichnet, dass** es sich bei dem Basispolyol um ein Polyetherpolyol handelt.

9. Verfahren gemäß Anspruch 7 oder 8, **dadurch gekennzeichnet, dass** als radikalisch polymerisierbare Monomere Styrol und/oder Acrylnitril mitverwendet werden.

10. Verfahren gemäß einem der Anspruche 7 bis 9, **dadurch gekennzeichnet, dass** als Radikalstarter Azoinitiatoren oder organische Peroxide eingesetzt werden.

11. Polymerisatgefüllte Polyetherpolyole erhältlich nach einem Verfahren gemäß einem der Ansprüche 1 bis 10.

12. Polyurethane, erhältlich unter Verwendung von polymerisatgefüllte Polyetherpolyolen gemäß Anspruch 11.

## Claims

1. Process for purifying polymer polyols, in which
A) volatile constituents are separated off from the polymer polyol to be purified by means of superheated steam in packed columns and
B) the purified polymer polyol obtained from A) is then optionally freed of water still present, once again in a packed column,
wherein a liquid distributor having a dripping point density of more than 400 dipping points per m² of column cross section is used in step A) for introducing the polymer polyol to be purified and the process is carried out in such a way that both the temperature of the preheated polymer polyol and also that of the superheated steam and that of the wall of the column is from 100 to 160°C and the polymer polyols are polymer-filled polyether polyols.

2. Process according to Claim 1, **characterized in that** packings having a strip-like lamellar structure and a specific surface area of from 230 to 450 m²/m³ are used in the columns.

3. Process according to Claim 1 or 2, **characterized in that** a liquid throughput based on the column cross section of from 0.5 to 3 m³/m²h prevails in step A) and optionally B).

4. Process according to any of Claims 1 to 3, **characterized in that** the mass flow of stripping medium based on the mass flow of polymer polyol is from 10 to 20% in step A) and optionally B).

5. Process according to any of Claims 1 to 4, **characterized in that** the polymer polyols purified by means of the process have a residual water content of ≤ 500 ppm.

6. Process according to any of Claims 1 to 5, **characterized in that** the polymer polyols purified by means of the process have contents of acrylonitrile of ≤ 25 ppm, of styrene of ≤ 50 ppm, of chain-transfer agent optionally used of ≤ 50 ppm and of recombination product of the free-radical initiator arising in the case of azo initiators of ≤ 280 ppm.

7. Process according to any of Claims 1 to 6, **characterized in that** the polymer polyols treated in the process are prepared by dissolving or dispersing free-radically polymerizable monomers in a base polyol and subsequently polymerizing these monomers by means of free-radical initiators so as to form a stable dispersion of polymer particles in the base polyol.

8. Process according to Claim 7, **characterized in that** the base polyol is a polyether polyol.

9. Process according to Claim 7 or 8, **characterized in that** styrene and/or acrylonitrile are concomitantly used as free-radically polymerizable monomers.

10. Process according to any of Claims 7 to 9, **characterized in that** azo initiators or organic peroxides are used as free-radical initiators.

11. Polymer-filled polyether polyols obtainable by a process according to any of Claims 1 to 10.

12. Polyurethanes obtainable using polymer-filled polyether polyols according to Claim 11.

## Revendications

1. Procédé pour la purification de polyols polymères, dans lequel
A) des constituants volatils sont séparés du polyol polymère à purifier via des colonnes garnies au moyen de vapeur d'eau surchauffée et
B) le polyol polymère purifié obtenu de A) est le cas échéant ensuite à nouveau libéré de l'eau encore contenue via une colonne garnie,
un répartiteur de liquide présentant une densité de sites de formation de gouttes supérieure à 400 sites de formation de gouttes par m² de section de colonne étant utilisé dans l'étape A) pour l'alimentation du polyol polymère à purifier et
le procédé étant guidé de manière telle que la température du polyol polymère préchauffé ainsi que celle de la vapeur d'eau surchauffée et celle de la gaine de la colonne est de 100 à 160°C et
où il s'agit, pour les polyols polymères, de polyétherpolyols chargés de polymère.

2. Procédé selon la revendication 1, **caractérisé en ce qu'**on utilise dans les colonnes des garnissages présentant une structure lamellaire en forme de bande et une surface spécifique de 230 à 450 m²/m³.

3. Procédé selon la revendication 1 ou 2, **caractérisé en ce que** la charge en un liquide au cours de l'étape A) et le cas échéant B), par rapport à la section de la colonne, est de 0,5 à 3 m³/m²h.

4. Procédé selon l'une quelconque des revendications 1 à 3, **caractérisé en ce que** le flux massique d'agent de rectification dans l'étape A) et le cas échéant B) par rapport au flux massique du polyol polymère est de 10 à 20%.

5. Procédé selon l'une quelconque des revendications 1 à 4, **caractérisé en ce que** les polyols polymères purifiés selon le procédé présentent une teneur résiduelle en eau ≤ 500 ppm.

6. Procédé selon l'une quelconque des revendications 1 à 5, **caractérisé en ce que** les polyols polymères purifiés selon le procédé présentent des teneurs en acrylonitrile ≤ 25 ppm, en styrène ≤ 50 ppm, en agent de régulation de chaîne le cas échéant utilisé ≤ 50 ppm et en produit de recombinaison de l'initiateur radicalaire, se formant dans le cas d'initiateurs azo, ≤ 280 ppm.

7. Procédé selon l'une quelconque des revendications 1 à 6, **caractérisé en ce que** les polyols polymères de base sont préparés **en ce que** des monomères, polymérisables par voie radicalaire, sont dissous ou dispersés dans un polyol de base et on polymérise ceux-ci ensuite au moyen d'initiateurs radicalaires de manière telle qu'il se forme une dispersion stable de particules polymères dans le polyol de base.

8. Procédé selon la revendication 7, **caractérisé en ce qu'**il s'agit, pour le polyol de base, d'un polyétherpolyol.

9. Procédé selon la revendication 7 ou 8, **caractérisé en ce qu'**on utilise conjointement, comme monomères polymérisables par voie radicalaire, du styrène et/ou de l'acrylonitrile.

10. Procédé selon l'une quelconque des revendications 7 à 9, **caractérisé en ce qu'**on utilise, comme initiateurs radicalaires, des initiateurs azo ou des peroxydes organiques.

11. Polyétherpolyols chargés de polymère, pouvant être obtenus selon un procédé selon l'une quelconque des revendications 1 à 10.

12. Polyuréthanes, pouvant être obtenus en utilisant des polyétherpolyols chargés de polymère selon la revendication 11.
